(19) Europäisches Patentamt
European Patent Office
Office européen des brevets

(11) Publication number: **0 307 916 B1**

(12) **EUROPEAN PATENT SPECIFICATION**

(45) Date of publication of patent specification: **13.01.93**

(51) Int. Cl.5: **C08L 79/08**, //(C08L79/08, 51:08)

(21) Application number: **88115150.0**

(22) Date of filing: **15.09.88**

(54) **Polyetherimide resin composition.**

(30) Priority: **18.09.87 JP 234051/87**

(43) Date of publication of application:
**22.03.89 Bulletin 89/12**

(45) Publication of the grant of the patent:
**13.01.93 Bulletin 93/02**

(84) Designated Contracting States:
**DE FR GB IT**

(56) References cited:
**EP-A- 0 122 308**
**EP-A- 0 156 027**
**WO-A-84/03899**

(73) Proprietor: **MITSUBISHI RAYON CO., LTD.**
**3-19, Kyobashi 2-chome Chuo-Ku**
**Tokyo 104(JP)**

(72) Inventor: **Yamamoto, Naoki**
**1665-32, Onocho Saeki-gun**
**Hiroshima-ken(JP)**
Inventor: **Yanagase, Akira**
**4-11, Misonodai**
**Otake-shi(JP)**
Inventor: **Mori, Hiroshi**
**2-12-8, Fukumen Onocho**
**Saeki-gun Hiroshima-ken(JP)**
Inventor: **Nakata, Akira**
**2-4-202, Kurokawa-3-chome**
**Otake-shi(JP)**
Inventor: **Suehiro, Misayo**
**24-45, Nishihara-1-chome Asaminami-ku**
**Hiroshima-shi(JP)**

(74) Representative: **TER MEER - MÜLLER - STEINMEISTER & PARTNER**
**Mauerkircherstrasse 45**
**W-8000 München 80(DE)**

EP 0 307 916 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

BACKGROUND OF THE INVENTION

FIELD OF THE INVENTION

The present invention relates to a polyetherimide resin composition superior in impact resistance, heat resistance, mechanical strength, moldability, flow properties, etc. and more particularly to a polyetherimide resin composition comprising a polyetherimide resin and a specific polyorganosiloxane-based graft copolymer.

DESCRIPTION OF THE PRIOR ART

Polyetherimide resins draw attention as being excellent in heat resistance and mechanical strength and having superior processability and recently their applications have been expanding. However, their moldings often show extremely low impact strength, particularly in notch impact strength. In the design of their moldings it is therefore necessary to exercise care on the shape of the moldings.

While methods for improving the impact resistance of polyetherimide resin moldings are disclosed in Japanese Patent Application Kokai (Laid-Open) Nos. 127361/85 and 156753/85, and published Japanese translation of PCT Patent Application Nos. 501006/85 and 501010/85 and other documents, any resin composition according to these methods has drawbacks in some of such properties as weather resistance, heat resistance, and the compatibility of components added to the polyetherimide resin therewith. Therefore, none of these methods take full advantage of excellent properties of polyetherimide in improving the impact resistance.

SUMMARY OF THE INVENTION

The present inventors made intensive studies with the object of improving polyetherimide resins in impact resistance while retaining the excellent heat resistance and mechanical strength which are inherent in these resins. As a result it has been found that when a polyorganosiloxane-based graft copolymer produced by graft polymerization of a vinyl monomer in a high efficiency onto a polyorganosiloxane rubber is compounded with a specific polyetherimide resin, a resin composition can be obtained which is good in the compatibility of the component resins with each other, does not undergo delamination when made into moldings, and is markedly improved in impact resistance and also superior in heat resistance, mechanical strength, moldability, and flow properties. Based on this finding, the present invention has been accomplished.

DETAILED DESCRIPTION OF THE INVENTION

The present invention involves a polyetherimide resin composition comprising 99 to 60% by weight of a polyetherimide resin (A) consisting mainly of repeating units represented by the formula (I)

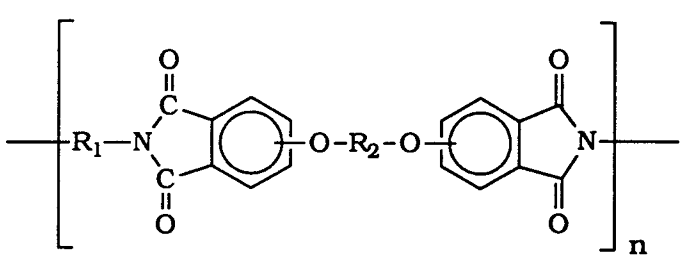

(I)

wherein $R_1$ and $R_2$ denote each a bivalent organic radical, and 1 to 40% by weight of a polyorganosiloxane-based graft copolymer (B) having a percentage of grafting of at least 10% produced by graft polymerizing 95-10% by weight of a vinyl monomer onto 5-90% by weight of a polyorganosiloxane rubber, based on the weight of the graft copolymer, which exhibits a degree of swelling of 3 to 30 as measured in toluene at 25°C and contains a graft-linking agent copolymerized.

Said polyorganosiloxane rubber is made up of the three constituents: an organosiloxane, a graft-linking

agent, and a crosslinking agent.

Examples of the organosiloxane that is a constituent of the polyorganosiloxane rubber include hexamethylcyclotrisiloxane, octamethylcyclotetrasiloxane, decamethylcyclopentasiloxane, dodecamethylcyclohexasiloxane, trimethyltriphenylcyclotrisiloxane, tetramethyltetraphenylcyclotetrasiloxane, and octaphenylcyclotetrasiloxane. These organosiloxanes may be used alone or in mixture of two or more. The content of these siloxanes in the polyorganosiloxane rubber is at least 50%, preferably at least 70%, by weight.

As the suitable graft-linking agents for use herein, compounds which can form a unit represented by any of the formulae (II), (III) and (IV) are used:

$$CH_2{=}\underset{\displaystyle R^2}{\underset{|}{C}}{-}COO{-}\!\left(CH_2\right)_p{-}SiR^1_nO_{(3-n)/2} \qquad \text{(II)}$$

$CH_2 = CH\text{-}SiR^1_nO_{(3-n)/2}$ (III), and

$$HS{-}\!\left(CH_2\right)_p{-}SiR^1_nO_{(3-n)/2} \qquad \text{(IV)},$$

wherein; $R^1$ denotes a methyl, ethyl, propyl, or phenyl group; $R^2$ denotes a hydrogen atom or a methyl group; n denotes 0, 1, or 2; and p denotes a number of 1 to 6. (Meth)acryloyloxysilanes which can form the unit represented by formula (II) are advantageous in the development of impact resistance since they give high graft efficiencies and hence permit the formation of effective graft chains. Of the compounds which can form the unit represented by formula (II), particularly preferred are methacryloyloxysilanes.

The content of the graft-linking agent in the polyorganosiloxane rubber is from 0.1 to 20%, preferably from 0.1 to 10%, by weight.

Suitable crosslinking agents for use herein are trifunctional and tetrafunctional siloxane types of crosslinking agents, for example, trimethoxymethylsilane, triethoxyphenylsilane, tetramethoxysilane, tetraethoxysilane, and tetrabutoxysilane. The content of the crosslinking agent in the polyorganosiloxane rubber is from 0.2 to 30% by weight. In other words, the crosslinking agent should be used in such an amount that the degree of swelling of the resulting polyorganosiloxane rubber (the ratio by weight of toluene absorbed by a polyorganosiloxane rubber when it is saturated with toluene at 25°C to the dry polyorganosiloxane rubber) is within the range of 3 to 30. When the degree of swelling is less than 3, i.e. when an excessive amount of crosslinking agent is used, the polyorganosiloxane will not exhibit enough rubber elasticity. When the degree of swelling exceeds 30, the polyorganosiloxane rubber cannot hold the domain structure of its own in the graft copolymer and hence cannot impart impact resistance. Compounding such a graft copolymer with polyetherimide resins achieves only effects equivalent to those produced by the simple addition of a polyorganosiloxane oil.

The degree of swelling of the polyorganosiloxane rubber is determined in the following way: A sample of polyorganosiloxane rubber latex prepared is added to about from 3 to 5 times its volume of isopropyl alcohol with stirring, thereby breaking and coagulating the emulsion to recover the siloxane polymer. The obtained polymer is washed with water, and dried under reduced pressure at 80°C for 10 hours. Then about 1 g of the dried polymer is precisely weighed out, and immersed in about 30 g of toluene at 25°C for 100 hours to swell with toluene. The extra toluene is then removed by decantation, The swelled polymer is weighed precisely, and dried under reduced pressure at 80°C for 16 hours to evaporate the absorbed toluene, and the resulting polymer is weighed again precisely. The degree of swelling is calculated according to the following equation:

$$\text{Degree of swelling} = \frac{\left(\text{Weight of swelled polymer}\right) - \left(\text{Weight of dry polymer}\right)}{\left(\text{Weight of dry polymer}\right)}$$

The above polyorganosiloxane rubber latex can be produced, for instance, according to methods described in U.S. Patent Nos. 2,891,920 and 3,294,725.

In a preferred embodiment of the present invention, the polyorganosiloxane rubber latex is produced by shear-mixing a mixture of the organosiloxane, graftlinking agent, and crosslinking agent with water in the presence of an emulsifier such as alkylbenzenesulfonic acid, or alkylsulfonic acid. Alkylbenzenesulfonic acid is best suited since it acts not only as an emulsifier but also as a polymerization initiator. In this case, the joint use of a metal salt of alkylbenzenesulfonic acid or a metal salt of alkylsulfonic acid is preferable since it is effective in maintaining the polymer stable during the graft polymerization.

Of suitable vinyl monomers for graft polymerization onto the polyorganosiloxane rubber, preferred are combinations of monoalkenyl aromatic monomers with (meth)acrylonitriles and particularly preferred are combinations of acrylonitrile with one or more of styrene, α-methylstyrene, and derivatives of these two monomers. The ratio by weight of the monoalkenyl aromatic monomer to (meth)acrylonitrile in combined use is desirably from 90:10 to 50:50. When the ratio departs from this range, it tends to be impossible to secure the expected performance of graft copolymer. In this case, it is allowable to copolymerize a small amount of other copolymerizable vinyl monomer.

The proportions of the vinyl monomer and the polyorganosiloxane rubber in the polyorganosiloxane-based graft copolymer are 95 - 10% by weight and 5 - 90% by weight, respectively, based on the weight of the graft copolymer. When the proportion of the polyorganosiloxane rubber is less than 5% by weight, the impact resistance of the resulting resin composition will not be improved sufficiently. When the proportion of the polyorganosiloxane rubber exceeds 90% by weight, the effect of grafting cannot be exhibited.

The polyorganosiloxane-based graft copolymer can be produced by the ordinary emulsion polymerization method. That is, the graft copolymer can be obtained according to the technique of radical polymerization by graft polymerizing the above-cited vinyl monomer onto the polyorganosiloxane rubber in latex form neutralized with alkali.

The polyorganosiloxane-based graft copolymer latex obtained as stated above is poured into a hot aqueous solution of a metal salt such as calcium chloride or magnesium sulfate to salt out or coagulate the graft copolymer, which then can be isolated to recover.

The polyorganosiloxane-based graft copolymer obtained by drying after isolation is a mixture of the free vinyl polymer formed incidentally during the graft polymerization and the graft vinyl polymer chemically combined with the polyorganosiloxane rubber. The amount ratio of this graft vinyl polymer combined with the polyorganosiloxane rubber to this rubber, viz. the percentage of grafting is a factor important for providing impact resistance to the polyetherimide resin. It is possible to secure the affinity of the polyorganosiloxane rubber for the polyetherimide resin through such grafted polymer chains linked to the rubber. Accordingly, the percentage of grafting is at least 10%, preferably at least 30%. For the graft polymerization, various vinyl monomers as stated above can be used in combination one with another. Of these combinations of vinyl monomers, most desirable are combinations of acrylonitrile with one or more of styrene, α-methylstyrene, and derivatives of these two monomers.

On the other hand, it is inevitable that the free polymer not linked to the polyorganosiloxane rubber is formed partly during the graft polymerization, but the formation of the free polymer is desirably minimized in view of the moldability and flow properties of the resin composition. That is to say, the ratio of the grafted vinyl monomer to the whole polymerized vinyl monomer, viz. the so-called graft efficiency varies greatly with the kind of graft-linking agent used. As stated above, (meth)acryloyloxysilanes, particularly methacryloyloxysilanes, forming units represented by the general formula (II) are most desirably used in that these graft-linking agents provide the highest graft efficiencies and the most improved moldability and flow properties.

The resin composition of the present invention comprises the polyetherimide resin (A) and the polyorganosiloxane-based graft copolymer (B) in amounts of 99 - 60% by weight and 1 - 40% by weight, respectively, based on the total polymer weight of the resin composition.

When the amount of component (A) is less than 60% by weight, such resin compositions tend to be provided with insufficient heat resistance. When the amount of component (B) is less than 1% by weight, the impact resistance improving effect of component (B) tends to be insufficient. When this amount exceeds 40% by weight, the content of the polyorganosiloxane rubber in consequence becomes excessively high and hence such resin compositions tend to have too low mechanical strength to be fitted for use.

The resin composition of the present invention is superior in heat resistance, impact resistance, particularly low-temperature impact resistance, and additionally superior in flow properties. Moreover, the impact resistance of the resin composition can be designed freely by varying the compounding ratio of component (B).

The resin composition of this invention may be prepared by mixing ingredients (A) and (B) mechanically using a known apparatus such as a Banbury mixer, roll mill, or twin-screw extruder, followed by pelletizing.

If necessary, the resin composition of this invention may contain additives such as stabilizers, plasticizers, lubricants, flame retardants, pigments, fillers, etc. More specifically, such additives include; stabilizers, e.g. triphenylphosphine; lubricants, e.g. polyethylene wax and polypropylene wax; phosphate type flame retardants, e.g. triphenyl phosphate and tricresyl phosphate; bromine-containing flame retardants, e.g. decabromobiphenyl and decabromobiphenyl ether; pigments, e.g. titanium oxide, zinc sulfide, and zinc oxide; and fillers, e.g. glass fiber, asbestos, wollastonite, mica, and talc.

The following examples illustrate the present invention in more detail.

In the examples and comparative examples, properties were evaluated in the following ways.

Izod impact strength:

Measured in accordance with ASTM D 256 (6.35mm) (1/4"), notched).

Heat distortion temperature:

Measured under a load of 18.56 kg in accordance with ASTM D 648.

Reference Example 1

Preparation of polyorganosiloxane-based graft copolymer S-1:

A mixture (100 parts by weight; hereinafter parts are all by weight) of 6 parts of tetraethoxysilane, 2 parts of $\gamma$-methacryloyloxypropyldimethoxymethylsilane, and 92 parts of octamethylcyclotetrasiloxane was added to 300 parts of distilled water containing 1 part of sodium dodecylbenzenesulfonate and 1 part of dodecylbenzenesulfonic acid. After preliminary stirring in a homomixer at a revolution of 10,000 rpm, the mixture was emulsified by passing it twice through a homogenizer under a pressure of 300 29.4MPa (kg/cm$^2$), giving an organosiloxane latex, This latex was poured into a separable flask equipped with a condenser and a stirrer, and was heated with stirring at 80°C for 5 hours, then cooled to 10°C, and maintained at this temperature for 20 hours. The resulting latex was neutralized with aqueous NaOH to pH 6.9 to finish the polymerization. Results of the polymerization were as follows: Yield of organosiloxane polymerized 90.8%; Degree of swelling of polyorganosiloxane rubber 6.8; Average diameter of rubber particles 0.14 µm.

264 Parts of the polyorganosiloxane rubber latex obtained was charged in a separable flask equipped with a stirrer. The air therein was replaced with nitrogen and then the latex was heated to 70°C. A mixture of 28 parts of styrene, 12 parts of acrylonitrile, and 0.16 part of tert-butyl peroxide was added, and the contents were stirred for 30 minutes. Further a mixture of 0.2 part of Rongalite, 0.0004 part of ferrous sulfate, 0.0008 part of disodium ethylenediaminetetraacetate, and 5 parts of distilled water was added to initiate the radical polymerization. The reaction temperature was retained for 3 hours and then the reaction mixture was cooled to finish the polymerization. Results of this graft polymerization were as follows: Yield of styrene-acrylonitrile copolymerized 96%; Percentage of grafting 52%; Graft efficiency 78%. The obtained latex was added dropwise to 456 parts of hot water containing 1.5 wt.% of calcium chloride to coagulate the polymer. The coagulum was separated, washed, and dried at 75°C for 10 hours, yielding a dry powdery graft copolymer S-1.

Reference Example 2

Preparation of polyorganosiloxane-based graft copolymers S-2, S-3, and S-4

A polyorganosiloxane rubber was prepared according to the procedure of Reference Example 1. Under the same conditions as applied in Reference Example 1 except the temperature condition, vinyl monomer mixtures of different compositions as shown in Table 1 were graft polymerized severally onto equal proportions of the above rubber, yielding graft copolymers in powder form. Results of the graft polymerizations are also shown in Table 1.

Table 1

| | S-2 | S-3 | S-4 |
|---|---|---|---|
| Graft vinyl monomer (parts) | Styrene 24<br>Acrylonitrile 16 | α-Methylstyrene 28<br>Acrylonitrile 12 | Styrene 14<br>α-Methylstyrene 14<br>Acrylonitrile 12 |
| Polymerization temperature | 70°C | 80°C | 70°C |
| Yield of vinyl monomer polymerized | 95% | 92% | 94% |
| Percentage of grafting | 50 | 47 | 50 |

Examples 1-6 and Comparative Example 1

Polyorganosiloxane-based graft copolymers S-1 to S-4 from Reference Examples 1 and 2 were blended each with a commercial polyetherimide (supplied by General Electric Co. under the tradename of ULTEM-1000) in proportions as shown in Table 2. These blends were each extruded, pelletized, and then injection

molded to prepare specimens for different tests. Evaluations of properties were made on these specimens of six resin compositions. Results of the evaluation are shown in Table 2. For comparison, the same polyetherimide as used above was injection molded alone to form specimens for tests. Results of evaluating properties on these specimens are also shown in Table 2.

Table 2

| | Example 1 | Example 2 | Example 3 | Example 4 | Example 5 | Example 6 | Compar. Example 1 |
|---|---|---|---|---|---|---|---|
| Polyorganosiloxane-based graft copolymer (parts) | S-1 8.3 | S-1 16.6 | S-1 4.2 | S-2 8.3 | S-3 8.3 | S-4 8.3 | - |
| Polyetherimide (parts) | 91.7 | 83.4 | 95.8 | 91.7 | 91.7 | 91.7 | 100 |
| Izod impact strength (1/4"), notched, at 23°C (kg·cm/cm) | 12 | 18 | 7 | 11 | 10 | 11 | 2 |
| Heat distortion temperature (°C) | 192 | 187 | 196 | 192 | 194 | 193 | 200 |

EFFECT OF THE INVENTION

According to the present invention, as described in detail hereinbefore, a polyetherimide resin composition superior in impact resistance, heat resistance, mechanical strength, moldability, flow properties, etc. can be obtained by compounding a polyetherimide resin with a specific polyorganosiloxane-based graft copolymer defined in the present specification. Thus the present invention achieves excellent effects.

## Claims

**1.** A polyetherimide resin composition comprising 99 to 60% by weight of a polyetherimide resin (A) consisting mainly of repeating units represented by the formula (I)

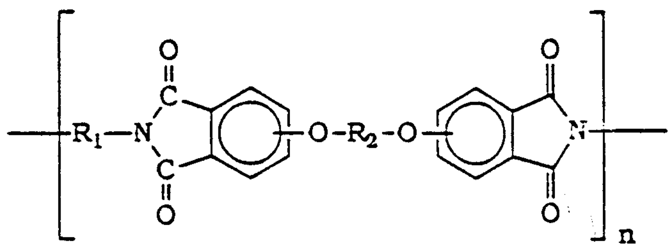

(I)

wherein $R_1$ and $R_2$ denote each a bivalent organic radical, and 1 to 40% by weight of a polyorganosiloxane-based graft copolymer (B) having a percentage of grafting of at least 10% produced by graft polymerizing 95-10% by weight of a vinyl monomer onto 5-90% by weight of a polyorganosiloxane rubber, based on the weight of the graft copolymer, which exhibits a degree of swelling of 3 to 30 as measured in toluene at 25 °C and contains a graft-linking agent copolymerized.

**2.** The polyetherimide resin composition of claim 1, wherein the vinyl monomer to be graft polymerized onto the polyorganosiloxane rubber is composed of an monoalkenyl aromatic monomer and (meth)-acrylonitrile.

**3.** The polyetherimide resin composition of claim 2, where in the mono-alkenyl aromatic monomer is selected from styrene, $\alpha$-methylstyrene, and their derivatives.

**4.** The polyetherimide resin composition of claim 2, wherein the ratio by weight of the monoalkenyl aromatic monomer to (meth)acrylonitrile is from 90:10 to 50:50.

## Patentansprüche

**1.** Polyetherimidharz-Zusammensetzung, umfassend 99 bis 60 Gew.-% eines Polyetherimidharzes (A), welches hauptsächlich aus sich wiederholenden Einheiten der Formel (I)

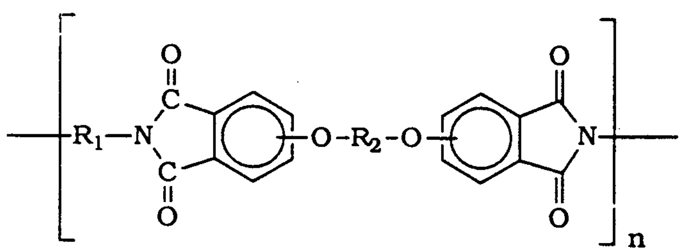

(I)

besteht, worin $R_1$ und $R_2$ jeweils einen zweiwertigen organischen Rest bedeuten, und
1 bis 40 Gew.-% eines Pfropfcopolymeren (B) auf Polyorganosiloxan-Basis mit einem Pfropf-Prozentanteil von mindestens 10 %, hergestellt durch Pfropfpolymereisieren von 95 bis 10 Gew.-% eines Vinylmonomeren auf 5 bis 90 Gew.-% eines Polyorganosiloxan-Kautschuks, bezogen auf das Gewicht des Pfropfcopolymeren, welcher einen in Toluol bei 25 °C gemessenen Quellungsgrad von 3 bis 30

aufweist und ein Pfropf-Vernetzungsmittel in copolymerisierter Form enthält.

2. Polyetherimidharz-Zusammensetzung nach Anspruch 1, wobei das auf den Polyorganosiloxan-Kautschuk zu pfropfpolymerisierende Vinylmonomer aus einem Monoalkenyl-aromatischen Monomer und (Meth)acrylnitril zusammengesetzt ist.

3. Polyetherimidharz-Zusammensetzung nach Anspruch 2, wobei das Monoalkenyl-aromatische Monomer aus Styrol, $\alpha$-Methylstyrol und deren Derivaten ausgewählt ist.

4. Polyetherimidharz-Zusammensetzung nach Anspruch 2, wobei das Gewichtsverhältnis des Monoalkenyl-aromatischen Monomer zu (Meth)acrylnitril 90 : 10 bis 50 : 50 beträgt.

**Revendications**

1. Une composition de résine polyétherimide comprenant 99 à 60 % en poids d'une résine polyétherimide (A) constituée principalement de motifs récurrents représentés par la formule (I)

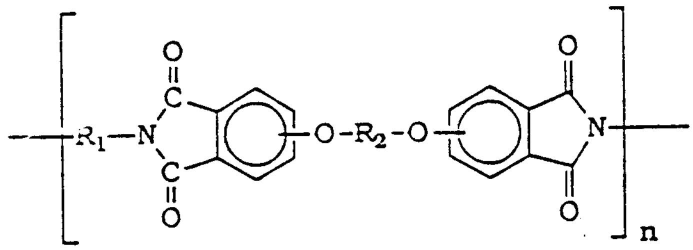

(I)

dans laquelle $R_1$ et $R_2$ représentent chacun un radical organique divalent, et 1 à 40 % en poids d'un copolymère greffé (B) à base de polyorganosiloxane ayant un pourcentage de greffage d'au moins 10 %, produit en polymérisant par greffage 95 à 10 % en poids d'un monomère vinylique sur 5 à 90 % en poids d'un caoutchouc de polyorganosiloxane, par rapport au poids du copolymère greffé, qui présente un degré de gonflement de 3 à 30, tel que mesuré dans le toluène à 25 °C, et contient un agent de greffage copolymérisé.

2. La composition de résine polyétherimide de la revendication 1, dans laquelle le monomère vinylique devant être polymérisé par greffage sur le caoutchouc de polyorganosiloxane est constitué d'un monomère monoalcényl-aromatique et de (méth)acrylonitrile.

3. La composition de résine polyétherimide de la revendication 2, dans laquelle le monomére monoalcénylaromatique est choisi parmi le styrène, le $\alpha$-méthylstyrène et leurs dérivés.

4. La composition de résine polyétherimide de la revendication 2, dans laquelle le rapport en poids du monomère monoalcényl-aromatique au (méth)acrylonitrile est compris entre 90:10 et 50:50.